# EUROPEAN PATENT APPLICATION

(11) **EP 2 366 285 A1**
(43) Date of publication of application: **21.09.2011**
(21) Application number: 11157982.7
(22) Date of filing: 11.03.2011
(51) Int. Cl.: A01K 13/00

(54) **A horse boot**

(30) Priority: 15.03.2010 GB 1004230
(71) Applicant: Finnegan, Patrick, Newtownards Down BT23 7PJ (GB)
(72) Inventor: Finnegan, Patrick, Newtownards Down BT23 7PJ (GB)
(74) Representative: Hanna, John Philip

(57) **Abstract**

A horse boot arrangement (1) for a horses hoof (4), the horse boot arrangement (1) having a flexible sock member (2) having a base portion (3) for engaging a sole of the horses hoof (4) and a sleeve portion (5) extending from the periphery of the base portion (3) for covering the hoof (4). An arrangement (6) is provided for fastening the sleeve portion (5) against the horses hoof (4) to ensure the flexible sock member (2) remains on the hoof under working conditions. Rigid ground engaging means (7) are detachably mounted to the flexible sock member (2) via coupling means (8).

## Description

The present invention relates to a horse boot and in particular to a horse boot for use with working horses to reduce the negative effects of traditional shoeing on the animals health and to allow the horses to perform close to their optimum level.

Traditionally working horses have been shod by blacksmiths where a steel horse shoe is tacked onto the hoof of each leg of the horse with nails. The horse's hoof is a living organism and the negative effects of repeatedly nailing a rigid steel U-shaped shoe onto the hooves of a horse are well documented. The hooves themselves crack from repeated shoeing and eventually the efficacy of the vascular pump or frog as it is known located in the central rearward portion of the hoof diminishes. The efficacy of the frog is reduced because the shoes prevent proper spreading of the hooves on impact which prevent the pump being compressed properly thereby pumping less blood. As the frog pumps the blood to the extremities of the horse's legs the effect this has on the health of the limbs of the horse can be severe. This is in addition to the actual pain caused to the animal because of the periodic shoeing process.

Horses are used in a wide range of functions with police horses being used for controlling crowds at events like concerts or football matches. Other people use horses for pulling carriages for weddings, shows, processions or other formal functions. In addition to horses being used in business ventures, many people like to take their own horses out hacking for fun and all of these occasions require the horses to be shod. Furthermore, in order to allow the horses to perform near their optimum level they should be trained which requires them to be operating at reasonable speeds over extended periods of time regularly. This is where the advantages of the traditional horse shoes come in because the horses can be trained for greater lengths of time at higher speeds on all sorts of surfaces. The ski effect provided by the steel horse shoes reduce the shock on the horses limbs each time the horse sets its hooves back onto the ground.

It is an object of the present invention to obviate or mitigate the problems of traditional horse shoes outlined above whilst retaining their advantages.

Accordingly, the present invention provides a horse boot arrangement for a horses hoof, the horse boot arrangement comprising a flexible sock member having a base portion for engaging a sole of the horses hoof and a sleeve portion extending from the periphery of the base portion for covering the hoof, means for fastening the sleeve portion against the horses hoof to ensure the flexible sock member remains on the hoof under working conditions, rigid ground engaging means being detachably mountable to the flexible sock member via coupling means.

Ideally, the rigid ground engaging means comprising a rigid base plate adaptable to have variable surface finishes.

Preferably, the sleeve portion is integral with the base portion of the flexible sock member.

Ideally, the fastening means fastens the sleeve portion to the upper part of the horses hoof.

Advantageously, a soft material rests against the hoof of the horse whilst a rigid material is in contact with the ground. The horse boot has the benefit of modern plastic/elastic horse shoes namely less concussion than a traditional metal horse shoe but the rigid ground engaging means ensures that the boot retains the benefits of the traditional horse shoe as well.

The benefit of the non metal sock is that there is less concussion on the horses hoof. Ideally, padding means is insertable between the rigid ground engaging means and the underside of the flexible sock member. The hoof can expand and contract within the flexible sock member during use to help the pump in the base of the horses hoof to pump blood to the extremities of the horse's legs.

Preferably, the rigid ground engaging means comprises an upper shoe enclosure extending up from the periphery of the base plate.

Ideally, the means for fastening the sleeve portion against the upper part of the horses hoof comprises at least one flexible elongate member.

Preferably, the means for fastening the sleeve portion against the upper part of the horses hoof comprises at least one belt.

Ideally, the sleeve portion comprises means for receiving the fastening means.

Preferably, the sleeve portion has means for receiving belt means for fastening the sleeve portion onto the upper part of the horses hoof.

Ideally, the ground engaging means is formed from a light weight metal

Preferably, the base plate is a light weight metal base plate. Advantageously, the speed available from a metal horse shoe on all surfaces is much greater as a result of the sliding action provided by the metal contacting the surface. Advantageously, the horse boot allows the horse to be worked at a higher speed with greater mileage resulting in higher performance.

Preferably, the ground engaging means is manufactured from titanium sheet.

Ideally, the rigid ground engaging means has any one of or any combination of a dimpled, swaged, studded or corrugated surface finish. Advantageously, the adaptability of the base plate allows Blacksmiths to readily modify the base plate using existing portable repair equipment to suit user requirements. This allows the operator significant control over the training of the horse with the added benefits of simple manufacture and repair of the base plate using a wide range of industrial materials.

Preferably, the rigid ground engaging means provides raised surface areas for attachments. Advantageously, this allows the horse boot to facilitate grip characteristics customized to individual requirements.

Preferably, the flexible sock member is lined with a non chafing material.

Ideally, the flexible sock member is lined with a natural material such as leather and most preferably chamois leather.

Preferably, the flexible sock member is manufactured from a non chafing material.

Ideally, the flexible sock member is manufactured from a natural material such as leather and most preferably chamois leather.

Ideally, the coupling means comprises flexible sock member coupling members for detachably engaging correspondingly located rigid ground engaging means coupling members.

Preferably, the flexible sock member coupling members and the rigid ground engaging means coupling members comprise mechanical connecting members.

Ideally, the mechanical connecting members are hooks and loops on the flexible sock member and the rigid ground engaging means.

In an alternative arrangement or a combination arrangement of coupling means, rivets are used to couple the flexible sock member to the rigid ground engaging means. Rivets are easy to drill out and replace and would be considered replaceable components by farriers and blacksmiths.

In a further coupling means or a combination arrangement of coupling means, a glue is used to couple the flexible sock member to the rigid ground engaging means. Preferably, low melting point glue could be used which can be readily heated to remove the flexible sock member to allow for hot repairs to plate and studs. Hooks and loops, rivets and glue can be used separately or in any combination.

Ideally, the removable base plate is adapted for receiving gripping members.

Preferably, the gripping members are mountable to the base plate by rivets, screws, bolts, studs, glues, solder, braze or weld.

Preferably, the gripping members are manufactured from expanded materials and coated in tungsten particles or borium for a wide range of finishes and grip patterns.

Ideally, the gripping members comprise grids or metal studs.

Ideally, the means for receiving the belt means comprises loops of material.

Preferably, the loops of material are a part of the flexible sock member.

Ideally, the belt means comprises a fabric or composite material.

Preferably, the belt means comprises a high density man made fabric.

Ideally, the belt means is manufactured from nylon.

In an alternative arrangement, the means for fastening the sleeve portion against the upper part of the horses hoof comprises an elastic rope.

Preferably, the means for fastening the sleeve portion against the horses hoof comprises a clasp arrangement on the flexible sock member.
Advantageously, the clasp arrangement releasably retains the elastic rope or belt thereto.

Ideally, the clasp arrangement comprises a base plate having a plurality of hooks or catches. Advantageously, the hooks or catches retain the elastic rope or belt on the clasp arrangement to securely fasten the flexible sock onto the horses hoof.

Preferably, the clasp arrangement is mounted at or about a leading edge portion of the flexible sock member.

Preferably, a separate elastic rope extends along each opposing lateral portion of the flexible sock member coupled together by a bridging member extending across the heel portion of the flexible sock member.

In a still further arrangement, a clasp arrangement is mounted at or about a heel portion of the flexible sock member. In this arrangement, the clasp arrangement is well padded to prevent any adverse impact effects on the horses heels.

Ideally, the elastic rope is in the form of a band. Advantageously, the band configuration allows the elastic rope to be readily coupled to the clasp arrangement and provides a loop for the bridging member to be coupled to.

Preferably, the bridging member is provided by a band of material such as rubber, plastic or leather. The band of material provides comfort for the animal spreading the load laterally across the heel area.

Ideally, the bridging member has shock absorbing means along at least a portion of its length. Advantageously, the shock absorbing means is provided by a cushion member such as a rubber tube. Advantageously, this reduces the transfer of the forces from the elastic rope to the heel of the animal during use.

Preferably, an upper elastic band and a lower elastic band extend along each lateral edge of the flexible sock member and two bridging members connect respective upper and lower elastic bands. Advantageously, the use of a pair of spaced apart elastic ropes on both lateral portions of the flexible sock member provide the horse boot with greater positional stability on the horses hoof during use and increases the resistance to removal of the horse boot during use.

Preferably, the flexible sock member coupling means and the means for retaining the flexible elongate member on the flexible sock member is provided by a hook member.

Ideally, outside brushing covers comprising a pliable material are connectable to the horse boot. Advantageously, the outside brushing covers are used to cover the hook members and/or the clasp arrangement preventing any adverse effects to the horses hooves if they clip off one another in use.

Preferably, the outside brushing cover is riveted to a central aperture of the hook member.

Ideally, the outside brush cover is wrapped over the top of the flexible sock member and is connected to the inside by a rivet passing through the upper aperture of the hook member.

Ideally, the hook member is a double ended hook member.

Preferably, the hook member has a generally C-shape in cross section with a flat central section connecting the two hook ends.

Ideally, the flat central portion of the hook member has a recess portion extending in a direction towards the two hook ends.

Preferably, a lower hook end of the hook member is formed for operable engagement with loops formed on the rigid ground engaging means.

Ideally, the recess portion of the hook member is formed for retaining the rope or belt onto the flexible sock portion.

Preferably, an upper hook member is formed for retaining the upper rope or belt onto the flexible sock member.

Ideally, the hook member is mechanically coupled to the flexible sock member by fasteners.

Preferably, two rivets either side of the recess portion of the hook member attach the hook member to the flexible sock member.

Accordingly, the present invention provides a method of manufacturing a horse boot comprising the steps of forming a rigid ground engaging means, forming a flexible sock member for insertion into the rigid ground engaging means, providing a coupling means for releasably coupling the rigid ground engaging means and the flexible sock member together, forming a means for fastening the flexible sock member to the horses hoof and forming a means for receiving the fastening means on the flexible sock member.

Preferably, the method comprising forming a mechanical coupling means on the rigid ground engaging means.

Ideally, the method comprising forming a mechanical coupling means on the flexible sock member

Preferably, the method comprising cutting, punching or pressing a metal blank from a metal sheet for forming the rigid ground engaging means. Alternatively, a sintered part can be made using a range of metal powders or a light weight casting can be produced.

Ideally, the method comprising cutting, punching or pressing the metal blank to form the coupling means.

Preferably, the method comprising cutting, punching or pressing the metal blank to form apertures proximal to the periphery of the blank. Advantageously, the apertures proximal to the periphery of the blank define loops for operable engagement with hooks on the flexible sock member.

Ideally, the method comprising cutting, pressing or punching the periphery of the blank for forming the periphery of the blank into an upper shoe member.

Preferably, the method comprising cutting, punching or pressing a metal blank to form radial slots from the periphery of the metal blank towards the centre of the blank. Advantageously, the slots create separable tabs of metal which are workable to provide the upper shoe member.

Preferably, the method comprising manually or mechanically forming the periphery of the blank into an upper shoe. Advantageously, the metal blanks are suitable for large scale production where automated CNC presses can form the shape of the upper shoe of the blank using forming tools. Alternatively, the metal blanks are suitable for manual forming where the blanks can be heat treated using a burner and shaped manually around a blank former. Advantageously, in view of the fact that Farriers and Blacksmiths are skilled in the art of metal shaping and forming, they would be able to produce the metal component of the horse boot from preformed blanks.

Ideally, the method comprising cutting, punching or pressing the metal blank to form an array of apertures on the blank formed for receiving stems of gripping studs.

Preferably, the method comprising riveting or welding the stems of the studs to the inside and/ or outside of the base plate. The process can be conducted manually or mechanically, using a specially designed jig for example.

Ideally, the method comprising spot welding the studs to the outside of the metal blank at one or more locations.

Ideally, the method comprising cutting, punching or pressing a sheet of pliable material to form a pliable material blank for forming the flexible sock member.

Preferably, the method comprising marking the pliable material blank with locations for cutting, drilling or punching holes.

Ideally, the method comprising cutting, drilling or punching holes at the marked locations of the pliable material blank.

Preferably, the method comprising fastening hook members in the predetermined holes of the flexible sock member.

Ideally, the method comprising fastening a clasp arrangement in the predetermined holes of the flexible sock member.

Preferably, the hook members and/or the clasp arrangement are fastened to the pliable material blank by rivets. Advantageously, the hook members and the clasp arrangement can be manually fastened to the pliable material by the use of a rivet gun and rivets. In this way partially formed/assembled components can be supplied to skilled craftsmen such as farriers and blacksmiths allowing them to assemble the horse boot on site or carry out repairs on horse boots which have become damaged during use. Alternatively, the components can be mechanically fastened onto the pliable material blanks using automated assembly processes.

Ideally, the method comprising cutting, pressing or punching the pliable material sheet to produce a pliable material blank having a central portion for forming the base of the flexible sock member and a plurality of tabs angularly spaced around the central portion for forming the integral sleeve portion.

Preferably, the angularly spaced tabs comprise lateral portions, a leading edge portion and a heel portion of the integral sleeve.

Ideally, the method comprising forming hook members.

Preferably, the method comprising cutting, pressing or punching metal hook blanks from a metal sheet having a plurality of apertures at predetermined locations of the hook blank. Alternatively, the hook members could be cast in tough plastic or nylon.

Preferably, the method comprising forming the metal hook blanks into a double ended hook member having a generally C-shape in cross section with a flat central section connecting two curved hook ends.

Ideally, the method comprising forming the flat central portion of the hook member with a recess portion extending in the same direction as the two curved hook ends.

Ideally, the method comprising fastening the hook member to the flexible sock member by fasteners.

Preferably, the method comprising fastening the hook members to the flexible sock member with two rivets either side of the recess portion of the hook member.

Advantageously, the hook members can be manually formed using a simple jig. In this way partially formed/assembled components can be supplied to skilled craftsmen such as farriers and blacksmiths allowing them to assemble the horse boot on site or carry out repairs on horse boots which have become damaged during use. Alternatively, the hook members can be formed from blanks using automated assembly processes.

Accordingly, the present invention provides a kit of parts for assembling a horse boot arrangement comprising a flexible sock member in the form of a pliable material blank having a base portion for engaging a sole of the horses hoof and a sleeve portion extending from the periphery of the base portion for covering the hoof, at least one flexible elongate member for fastening the sleeve portion against the horses hoof to ensure the flexible sock member remains on the hoof under working conditions, means for retaining the at least one flexible elongate member on the flexible sock member, rigid ground engaging means in the form of an at least partly formed blank and coupling means for releasably coupling the at least partly formed blank onto the flexible sock member. Advantageously, the kit of parts allows semi-skilled and skilled operators to assemble and repair horse boots with a minimal amount of engineering.

Preferably, the means for retaining the flexible elongate member on the flexible sock member comprises a plurality of hook members and a clasp arrangement.

Ideally, the at least partly formed blank is a flat metal sheet cut, pressed or punched with all of the apertures and slots preformed to allow forming of the upper shoe and base. Advantageously, if the rigid ground engaging means is supplied in the kit as flat sheets then a forming plate can also be supplied with the kit to allow the flat sheet to be formed.

Alternatively, the rigid ground engaging means is provided in the kit as a fully formed three dimensional component.

Preferably, coupling members are provided on the rigid ground engaging means.

Ideally, correspondingly located coupling members are provided on the flexible sock member.

Ideally, the means for coupling the flexible sock member to the coupling means of the rigid ground engaging means comprises a plurality of hook members.

The invention will now be described with reference to the accompanying drawings which shows by way of example only one embodiment of a horse boot in accordance with the invention. In the drawings:

Figure 1 is a side elevation view of a horse boot mounted on a horses hoof;

Figure 2 is a second side elevation view showing the flexible sock member partly detached from the rigid ground engaging member;

Figure 3 is a side elevation exploded view of the horse boot;

Figure 4 is a side elevation view of a horses hoof separate from a flexible sock member;

Figure 5 is a side elevation view of a flexible sock member in an open configuration partially mounted on a horse's hoof;

Figure 6 is a side elevation view of a flexible sock member in a closed configuration fully mounted on a horse's hoof;

Figure 7 is a top plan view of a rigid ground engaging member;

Figure 8 is a side elevation view of the rigid ground engaging member of Figure 7;

Figure 9 is a bottom plan view of the rigid ground engaging member of Figures 7 and 8;

Figure 10 is a front elevation view of a rigid ground engaging member of Figures 7 to 9;

Figure 11 is a detail view of a gripping member of the rigid ground engaging member;

Figure 12 is an elevation view of a clasp arrangement;

Figure 13 is a top plan view of the clasp arrangement of Figure 12;

Figure 14 is an elevation view of two bridging members;

Figure 15 is an elevation view of a hook member; and

Figure 16 is a side view of the hook member of Figure 15.

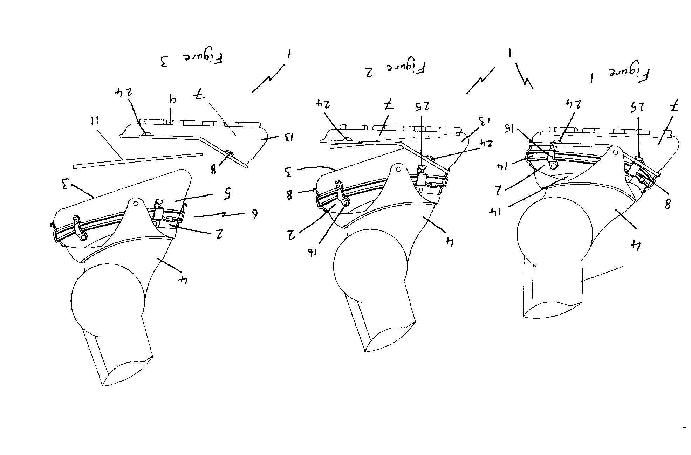

In the drawings and referring initially to Figures 1 to 3, there is shown a horse boot arrangement indicated generally by the reference numeral 1 for a horses hoof 4. The horse boot arrangement 1 comprises a flexible sock member 2 having a base portion 3 for engaging a sole of the horse's hoof 4. The flexible sock member 2 also has an integral sleeve portion 5 extending from the periphery of the base portion 3 for covering the hoof 4. An arrangement indicated generally by reference numeral 6 for fastening the sleeve portion 5 against the upper part of the horse's hoof 4 is provided on the flexible sock member 2 to ensure the flexible sock member 2 remains on the hoof 4 under working conditions. A rigid ground engaging member 7 is detachably mounted to the flexible sock member 2 via coupling members 8. The rigid ground engaging member 7 has a rigid base plate 9 adaptable to have variable surface finishes and an upper shoe enclosure 13 extending up from the periphery of the base plate 9 for loosely enclosing the lower portion of the horses hoof 4.

Advantageously, a flexible material rests against the hoof 4 of the horse whilst a rigid material is in contact with the ground when the horse places its hooves 4 on the ground. The horse boot 1 has the benefits of modern plastic/elastic horse shoes namely less concussion than a traditional horse shoe but the rigid ground engaging member 7 ensures that the horse boot 1 retains the benefits of the traditional horse shoe as well namely the increase in work available compared to the unshod hoof.

The benefit of the flexible sock is that there is less concussion on the horse's hooves 4. A padding member 11 is inserted between the stiff base plate 9 and the underside of the flexible sock member 2. The hoof 4 can expand and contract within the flexible sock member 2 and the upper shoe enclosure 13 during use to help the pump in the base of the horse's hoof 4 to pump blood to the extremities of the horse's legs. The flexible sock member 2 is manufactured from a non chafing material. The material is a natural material such as leather and most preferably chamois leather. In an alternative arrangement, the flexible sock member 2 is lined with a non chafing material. Again, the material is a natural material such as leather and most preferably chamois leather.

The arrangement for fastening the sleeve portion 5 against the upper part of the horse's hoof 4 is provided by a pair of belts 14 spaced apart on the flexible sock member 2. The sleeve portion 5 has loops 15 distributed around the circumference of the sleeve portion of the flexible sock member 2. The loops 15 are securely fastened to the flexible sock member 2 by studs or rivets 16 in the embodiment shown in the drawings although it will of course be appreciated that any suitable fasteners can be used. The material of the sleeve portion 5 is folded over on itself at the upper end of the flexible sock member 2 for securing the other belt 14 in location for fastening the sleeve portion 5 onto the upper part of the horse's hoof 4. The belts 14 have buckles 17 for securing the sleeve portion tightly on the horses hoof. The loops 15 of material are a part of the flexible sock member 3. The belts 14 are manufactured from a fabric or composite material. The belts 14 in the drawings are a high density man made fabric namely nylon.

The rigid base plate 9 and the upper shoe enclosure 13 are manufactured from a light weight metal. Advantageously, the working speed of a horse available from a metal horse shoe on all surfaces is much greater as a result of the sliding action provided by the metal contacting the surface. Advantageously, the horse boot 1 allows the horse to be worked at a higher speed with greater mileage resulting in higher performance.

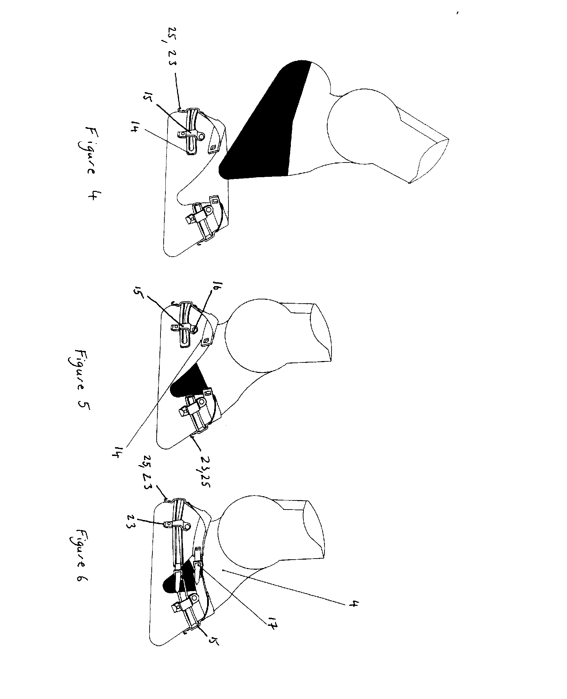

As shown in Figures 1 to 6, the coupling members 8 comprise flexible sock member coupling members 23 for detachably engaging correspondingly located rigid ground engaging means coupling members 24. The flexible sock member coupling members 23 and the rigid ground engaging means coupling members 24 comprise mechanical connecting members 23, 24 such as hooks and loops mounted on the flexible sock member 2 and the rigid ground engaging member 7.

In the embodiment shown in Figures 1 to 6 of the drawings the flexible sock member coupling members 23 are provided by hooks 25 provided on the loops 15 of material for receiving the belt 14. The upper shoe enclosure 13 of the rigid ground engaging member 7 has a plurality of apertures 27 located on the upper shoe enclosure 13 so as to align with the hooks 25 when the flexible sock member 3 is pressed into the upper shoe enclosure 13. The hooks 25 snap fit into the apertures 27 to ensure that the flexible sock member 3 and the upper shoe enclosure 13 remain securely connected during use.

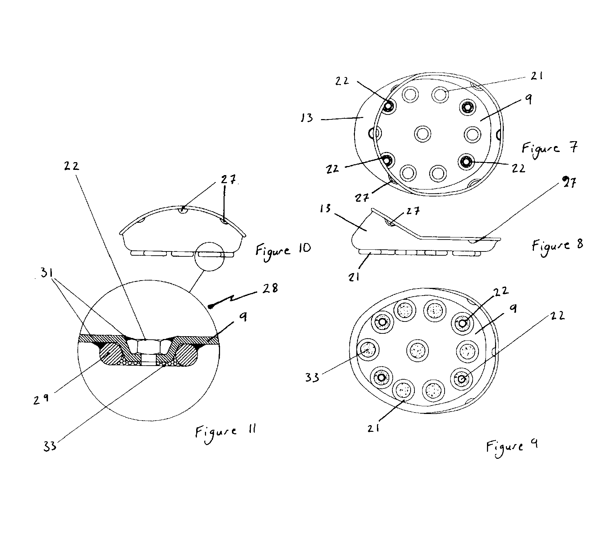

The base plate 9 has a dimpled surface finish although swaged or corrugated are alternative surface finishes. Advantageously, the adaptability of the base plate 9 allows Blacksmiths to readily modify the base plate 9 using existing portable repair equipment to suit user requirements. This allows the operator significant control over the training of the horse with the added benefits of simple manufacture and repair of the base plate 9 using a wide range of malleable industrial materials. Referring more particularly to Figures 7 to 11, the base plate 9 of the rigid ground engaging member 7 provides raised surface areas 21 providing a dimpled surface finish on the ground engaging surface of the base plate 9. Four of the raised surface areas 21 provide a threaded nut 22 for receiving the threaded shank of an attachment such a stud (not show). Advantageously, this allows the horse boot 1 to facilitate grip characteristics customized to individual requirements such as studs for polo or jumping horses.

Referring specifically to Figure 11, in order to allow additional controllability to the type of ground engaging surface available to different horse owners, the base plate 9 is adaptable by adding gripping members indicated generally by the reference numeral 28 to the raised surfaces 21. The gripping members 28 are provided by attaching a metal or composite ring 29 around the raised surface 21 using a weld, braze or glue 31. The same weld, braze or glue 31 can be used to connect the threaded nut 22 to the base plate 9. An additional gripping surface 33 is bonded, brazed or welded into the cavity defined between the raise surface 21 and the ring 29. Varying this material allows a blacksmith to readily vary the grip characteristics of the horse boot 1.

The gripping members 28 are mountable to the base plate 9 by rivets, screws, bolts, studs, glues, solder, braze or weld. The rings 29 are manufactured from a range of metal or composite materials and coated in tungsten or borium.

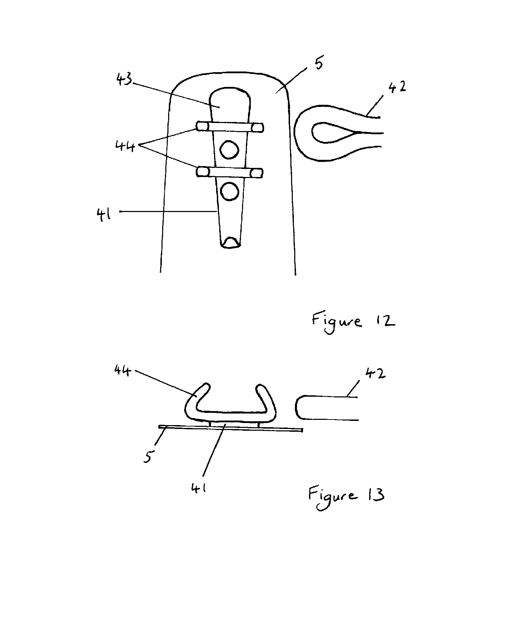

Referring to the drawings and now to Figures 12 to 16, there is shown an alternative arrangement for fastening the sleeve portion 5 against the upper part of the horses hoof 4.

In this arrangement, the arrangement for fastening the sleeve portion 5 against the upper part of the horses hoof 4 comprises a clasp arrangement 41 on the sleeve portion 5 of the flexible sock member 2 for releasably retaining an elastic rope 42 thereto.

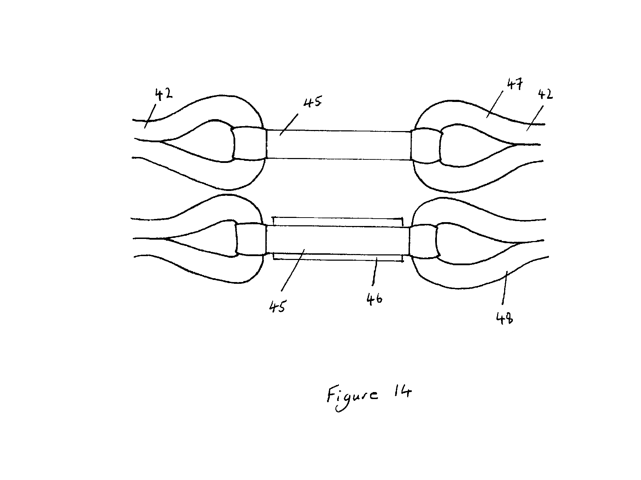

The clasp arrangement 41 has a base plate 43 having two/four as show/six hooks 44 or catches preferably welded to the plate 43. Advantageously, the hooks 44 or catches retain the elastic rope 43 on the clasp arrangement 41 to securely fasten the flexible sock 2 onto the horses hoof 4. The clasp arrangement 41 is mounted at or about a leading edge sleeve portion 5 of the flexible sock member 2. A separate elastic rope 42 extends along each opposing lateral portion of the flexible sock member 2 coupled together by a bridging member 45 see Figure 14 extending across the heel portion of the flexible sock member 2. The elastic rope 42 is in the form of a band. Advantageously, the band configuration allows the elastic rope 42 to be readily coupled to the hooks 44 of the clasp arrangement 41 and provides a loop for the bridging member 45 to be coupled to.

The bridging member 45 is provided by a band of plastic material. The bridging member 45 has shock absorbing member 46 along at least a portion of its length. Advantageously, the shock absorbing member 46 is provided by a cushion member such as a rubber tube. Advantageously, this reduces the transfer of the forces from the elastic rope 42 to the heel of the animal during use of the horse shoe 1.

An upper elastic band 47 and a lower elastic band 48 extend along each lateral edge of the flexible sock member 2 and two bridging members 45 connect respective upper and lower elastic bands 47, 48. Advantageously, the use of a pair of spaced apart elastic ropes 42 on both lateral portions of the flexible sock member 2 provide the horse boot 1 with greater positional stability on the horses hoof 4 during use and increases the resistance to removal of the horse boot 1 during use.

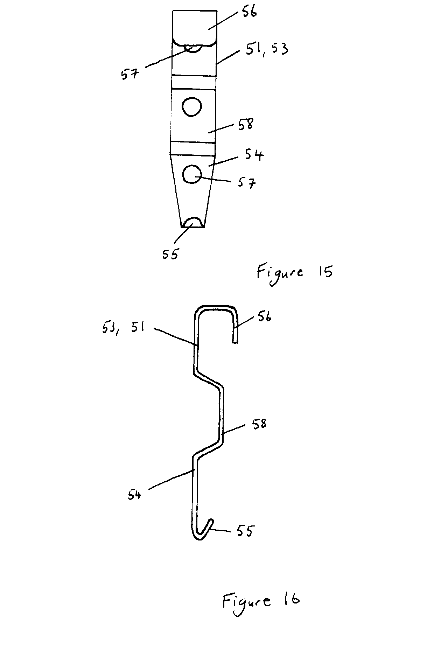

In this alternative arrangement, the flexible sock member coupling arrangement 51 and the arrangement 51, see Figures 15 and 16 for retaining the elastic rope 42 on the flexible sock member 2 is provided by a hook member 53, see Figures 15 and 16. The hook member 53 is a double ended hook member 53. The hook member 53 has a generally C-shape in cross section with a flat central section 54 connecting two hook ends 55, 56.

The flat central portion 54 of the hook member 53 has a recess portion 58 extending in a direction towards the two hook ends 55, 56. The lower hook end 55 of the hook member 53 is formed for operable engagement with loops 24, 27 formed on the rigid ground engaging member 7. The recess portion 58 of the hook member 53 is formed for retaining the elastic rope 42 or belt 14 onto the flexible sock portion 2. The upper hook member 56 is formed for retaining the upper rope 42 or belt 14 onto the flexible sock member 2. The hook member 53 is mechanically coupled to the flexible sock member 2 by fasteners and in the embodiment shown in Figures 15 and 16 two rivets are inserted in apertures 57 either side of the recess portion 58 of the hook member 53 to attach the hook member 53 to lateral portions of the flexible sock member 2.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof as defined in the appended claims.

## Claims

1. A horse boot arrangement (1) for a horses hoof (4), the horse boot arrangement (1) comprising a flexible sock member (2) having a base portion (3) for engaging a sole of the horses hoof (4) and a sleeve portion (5) extending from the periphery of the base portion (3) for covering the hoof (4), means (6) for fastening the sleeve portion (5) against the horses hoof (4) to ensure the flexible sock member (2) remains on the hoof under working conditions, rigid ground engaging means (7) being detachably mountable to the flexible sock member (2) via coupling means (8).

2. A horse boot arrangement (1) as claimed in claim 1, wherein the rigid ground engaging means (7) comprising a rigid base plate (9) adaptable to have variable surface finishes.

3. A horse boot arrangement (1) as claimed in claim 1 or claim 2, wherein padding means (11) is insertable between the rigid ground engaging means (7) and the underside of the flexible sock member (2).

4. A horse boot arrangement (1) as claimed in any one of the preceding claims, wherein the rigid ground engaging means (7) has an upper shoe enclosure (13) extending up from the periphery of the base plate (9).

5. A horse boot arrangement (1) as claimed in any one of the preceding claims, wherein the means for fastening the sleeve portion (5) against the upper part of the horses hoof (4) is provided by at least one flexible elongate member (14, 42).

6. A horse boot arrangement (1) as claimed in any one of the preceding claims, wherein the sleeve portion (5) comprises means (51) for receiving the fastening means (1, 42).

7. A horse boot arrangement (1) as claimed in any one of the preceding claims, wherein the rigid ground engaging means (7) is formed from a light weight metal.

8. A horse boot arrangement (1) as claimed in any one of the preceding claims, wherein the rigid ground engaging means (7) has any one of or any combination of a dimpled, swaged, studded or corrugated surface finish.

9. A horse boot arrangement (1) as claimed in any one of the preceding claims, wherein the coupling means (8) comprises flexible sock member coupling members (25, 51) for detachably engaging correspondingly located rigid ground engaging means coupling members (24).

10. A horse boot arrangement (1) as claimed in any one of the preceding claims, wherein the coupling means (24, 25, 51) are mechanical connecting members comprising hooks (25, 51) and loops (24) on the flexible sock member (2) and the rigid ground engaging means (7).

11. A horse boot arrangement (1) as claimed in any one of the preceding claims, wherein the means for fastening the sleeve portion (5) against the horses hoof (4) comprises a clasp arrangement (41) on the flexible sock member (2).

12. A horse boot arrangement (1)as claimed in any one of claims 9 to 11, wherein the flexible sock member coupling means (51) and the means (51) for retaining the flexible elongate member (14, 42) on the flexible sock member (2) is provided by a hook member (51).

13. A method of manufacturing a horse boot arrangement (1) comprising the steps of forming a rigid ground engaging means (7), forming a flexible sock member (2) for insertion into the rigid ground engaging means (7), providing a coupling means (24, 25, 51) for releasably coupling the rigid ground engaging means (7) and the flexible sock member (2) together, forming a means (14, 42) for fastening the flexible sock member (2) to the horses hoof (4) and forming a means (51) for receiving the fastening means on the flexible sock member (2).

14. A method as claimed in claim 13, wherein the method comprises cutting, punching or pressing a metal blank from a metal sheet or sintering or casting a metal blank for forming the rigid ground engaging means (7) and cutting, punching or pressing a sheet of pliable material to form a pliable material blank for forming the flexible sock member (2).

15. A kit of parts for assembling a horse boot arrangement (1) comprising a flexible sock member (2) in the form of a pliable material blank having a base portion (3) for engaging a sole of the horses hoof and a sleeve portion (5) extending from the periphery of the base portion (3) for covering the hoof (4), at least one flexible elongate member (14, 42) for fastening the sleeve portion (5) against the horses hoof (4) to ensure the flexible sock member (2) remains on the hoof (4) under working conditions, means for retaining the at least one flexible elongate member (14, 42) on the flexible sock member (2), rigid ground engaging means (7) in the form of an at least partly formed metal blank and coupling means for releasably coupling the at least partly formed blank onto the flexible sock member.
